Europäisches Patentamt

European Patent Office

Office européen des brevets

(11) Publication number: **0 411 804 A1**

# EUROPEAN PATENT APPLICATION

(21) Application number: **90307996.0**

(22) Date of filing: **20.07.90**

(51) Int. Cl.5: **F16J 15/00, F16J 15/16**

(30) Priority: **03.08.89 GB 8917729**

(43) Date of publication of application:
**06.02.91 Bulletin 91/06**

(84) Designated Contracting States:
**AT BE CH DE DK ES FR GB GR IT LI LU NL SE**

(71) Applicant: **JOHN CRANE UK LIMITED**
**Crossbow House 40 Liverpool Road**
**Slough, Berkshire SL1 4QX(GB)**

(72) Inventor: **Martin, Paul**
**3 Lammas Road**
**Slough, Buckinghamshire(GB)**

(74) Representative: **Watts, Peter Graham et al**
**Anthony Cundy & Co. 384 Station Road**
**Dorridgedge**
**Solihull West Midlands B93 8ES(GB)**

(54) **Seals.**

(57) A seal includes a primary seal (10) arranged to provide a fluid tight seal between a shaft (17) and housing (12) and an auxiliary sealing device (25) having a running clearance when the primary seal (10) is operating normally but impeding flow of fluid upon failure of the primary seal (10). A drain (26) is provided to the space (27) between the primary seal (10) and auxiliary sealing device (25) and an annular element (30) is mounted upon shaft (17), intermediate of the primary seal (10) and auxiliary sealing device (25), for rotation with the shaft (17). The annular element (30) is provided with vanes (31) which induce flow of fluid past the auxiliary sealing device (25) into the space (27) and out through the drain (26).

FIG 1

## SEALS

The present invention relates to seals and in particular to mechanical face seals for providing a seal between a pair of relatively rotatable components.

In mechanical face seals where faces of a pair of seal face members run against one another to provide a seal, sealed fluid is permitted to leak in controlled manner across the engaging faces, in order to provide lubrication. In order to minimise leakage to atmosphere, a throttle bush may be located outboard of the mechanical face seal and a drain provided from the space between the mechanical face seal and throttle bush. Nevertheless, as pressure in the space between the mechanical face seal and the throttle bush will be above atmospheric pressure, some leakage of sealed fluid to atmosphere cannot be prevented. The throttle bush does act as an emergency device in case the mechanical face seal fails, causing most of the leaked fluid to be expelled through the drain.

Where the sealed fluid is hazardous, for example toxic or flammable, it has consequently been necessary hitherto to employ a double seal and fill the space between the two seals with a fluid sealant. This involves the expense of a second mechanical face seal and also auxiliary equipment for pressuring and circulating the sealant fluid and also for removing the leaked fluid from the sealant fluid.

According to one aspect of the present invention a seal comprises a primary seal having a pair of seal face members, one seal face member being urged into sealing engagement with the other, an auxiliary sealing device is provided outboard of the primary seal, said auxiliary sealing device having a running clearance when the primary seal is operating normally but impeding flow of fluid upon failure of the primary seal and, a drain is provided to the space between the primary seal and the auxiliary sealing device characterised in that means is provided between the primary seal and auxiliary sealing device to induce flow of fluid past the auxiliary sealing device into the space between the primary seal and auxiliary sealing device and out through the drain.

In the seal disclosed above, the flow of fluid past the auxiliary sealing device prevents the flow of leaked fluid therethrough, and purges the leaked fluid from the space between the primary seal and auxiliary sealing device out through the drain.

The auxiliary sealing device may be a throttle bush, but according to a preferred embodiment is a seal which comes into operation to provide a fluid tight seal, when pressure in the space between the primary seal and auxiliary sealing device increases due to failure of the primary sealing device.

The invention is now described, by way of example only, with reference to the accompanying drawings in which:-

Figure 1 illustrates in sectional side elevation a seal in accordance with the present invention;

Figure 2 illustrates in sectional side elevation a modification to the seal illustrated in Figure 1; and

Figure 3 illustrates in sectional side elevation an alternative modification to the seal illustrated in Figure 1.

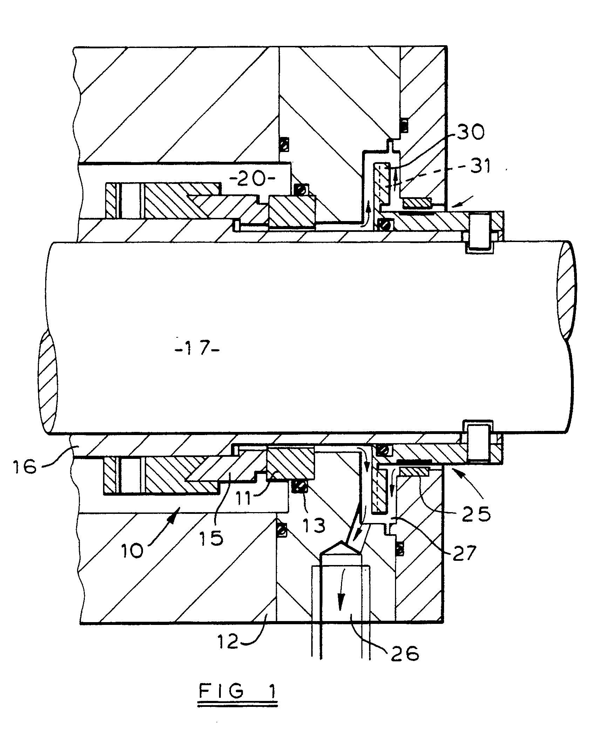

In the seal illustrated in Figure 1, a primary seal 10 is formed by a seat 11 which is non-rotatably located in the recess in housing 12 and is sealed with respect thereto by means of O-ring 13. A seal face member 15 is slidably mounted on a sleeve 16 which is mounted on shaft 17 for rotation therewith. The seal face member 15 is urged axially into sealing engagement with the seat 11.

The primary seal 10 disclosed above is of conventional design and provides a seal between housing 12 and slaft 17, to prevent sealed fluid in the chamber 20 defined by housing 12 from escaping to atmosphere. The primary seal 10 is however designed to operate with a thin film of sealed fluid between the engaging faces of the seat 11 and seal face member 15 in order to lubricate the faces. As a result, the sealed fluid will leak in controlled manner passed the primary seal 10.

A throttle bush 25 is provided outboard of the primary seal 10 to provide a restricted path to atmosphere. A drain port 26 is connected to the space 27 defined between the primary seal 10 and throttle bush 25, by which sealed fluid leaking past the primary seal 10 may be removed to a safe area.

Intermediate of the throttle bush 25 and drain port 26, a disk 30 is mounted on shaft 17 for rotation therewith within the space 27. The disk 30 is provided with vanes 31, so that when the disk 30 rotates with the shaft 17, a flow of air will be induced from atmosphere, past the throttle bush 25 and out through the drain port 26. The flow of air induced by the vanes 31 of disk 30, will prevent the seal fluid which leaks past the primary seal 10 under normal operation, from escaping to atmosphere and will purge the leaked fluid from the space 27 out through the drain port 26.

With the above seal, the flow of air from atmosphere will not be sufficient to withstand the pressure of a mass escape of sealed fluid should the primary seal 10 fail. However, the throttle bush will act to reduce leakage to atmosphere causing most of the leaked fluid to be removed via the drain port 26.

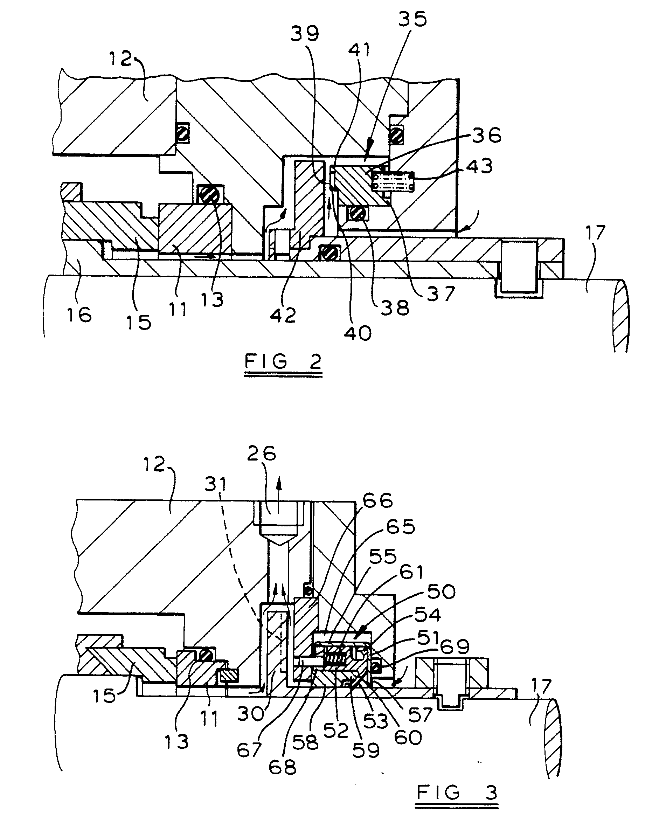

In the modification illustrated in Figure 2, the throttle bush 25 is replaced by an auxiliary face seal 35. This auxiliary face seal 35 comprises a seal face member 36 which is located in recess 37 in the housing 12 and is sealed with respect thereto by means of O-ring 38. The seal face member 36 has a sealing face 39 having a series of spiral grooves 40 extending from its inner periphery part way across the face 39, so as to form a continuous dam formation 41 at its outer periphery. The disk 42 which is mounted on shaft 17 intermediate of the primary seal 10 and seal face member 36 and is constrained to rotate with the shaft 17, is of plain configuration.

A series of angularly spaced compression springs 43 act on the seal face member 36 to urge the sealing face 39 thereof into engagement with the opposed surface of the disk 42. One or more angularly spaced pins may also be provided to prevent rotation of the seal face member 36 relative to the housing 12.

Under normal operation, drag on the disk 42 will cause air to circulate in the vicinity of the sealing face 39 of seal face member 36. The spiral grooves 40 on the seal face member 36 are orientated such that circulation of air will induce flow of air down the grooves 39 thereby forcing the dam formation 41 out of engagement with the disk 42. The flow of air will thus prevent sealed fluid leaking under normal operation from escaping to atmosphere and will purge the leaked fluid from the space 27 in similar manner to that described above. This flow of air will also maintain a separation between seal face member 36 and disk 42 so that these components will not be subject to wear. If however the primary seal 10 fails, the pressure of the sealed fluid behind the seal face member 36 will force the face 39 into engagement with the disk 42, so that the dam formation 41 on face 39 will act as an emergency seal.

In the seal illustrated in Figure 3 the throttle bush 25 of the seal illustrated in Figure 1 is replaced by an auxiliary seal 50 of the form disclosed in UK Patent Application 8904517.3.

The auxiliary seal 50 has an annular sealing element 51 made of PTFE. The sealing element 51 has a body portion 52, a first lip formation 53 extending inwardly from one end of the body portion 52 towards the other end and a second lip formation 54 extending radially outwardly. A recess 55 is provided in the body portion 52 adjacent to lip formation 54. The sealing element 51 is located within a retaining ring 56 which is cylindrical with a radially inwardly directed flange 57 at one end. The cylindrical portion of retaining ring 56 has an internal diameter slightly greater than the external diameter of body portion 52, lip 54 being deformed to make sealing engagement therewith. A support ring 58 has a spigot portion 59 which locates within the sealing element 50 from the end thereof remote from lips 53 and 54. The spigot portion 59 extends towards lip 53 and the end 60 is chamfered to provide a clearance therebetween. Axially clear of the sealing element 51, the support ring 58 is of enlarged diameter and radially overlaps the body portion 52. A series of angularly spaced springs 61 act between the sealing element 51 and opposed radial face of the support ring 58.

The seal 50 is located in a recess 65 in the housing 12 by means of retaining plate 66. The support ring 58 engages retaining plate 66 and a pin 67 secured to the retaining plate 66 engages in a radial groove 68 in the support ring 58 to prevent relative rotation therebetween. The springs 61 urge the sealing element 51 and retaining ring 56 abutted thereby into engagement with the opposed wall of the recess 65 to which it is sealed by means of O-ring 69. The lip 53 has a close clearance or light interference fit on the shaft 17 and is directed to the primary seal 11, 15.

In normal operation, the lip 53 will be held clear of the shaft 17 by the flow of air which is induced by the vanes 31 of disk 30 and will consequently be subject to little or no wear. However, upon failure of the primary seal 11, 15, the pressure of fluid leaking past the primary seal will force the lip 53 into sealing engagement with shaft 17.

The auxiliary seals described in the embodiments described with reference to Figures 2 and 3, as compared with the throttle bush described with reference to Figure 1, will thus provide improved containment of the sealed fluid in the event that the primary seal 10 fails.

## Claims

1. A seal comprising a primary seal (10) having a pair of seal face members (11, 15), one seal face member (15) being urged into sealing engagement with the other (11), an auxiliary sealing device (25; 35; 50) is provided outboard of the primary seal (10), said auxiliary sealing device (25; 35; 50) having a running clearance when the primary seal (10) is operating normally but impeding flow of fluid upon failure of the primary seal (10) and a drain (26) is provided to the space (27) between the primary seal (10) and the auxiliary sealing device (25; 35; 50) characterised in that means (30; 42) is provided between the primary seal (10) and auxiliary sealing device (25; 35; 50) to induce flow of fluid past the auxiliary sealing device (25; 35; 50) into the space (27) between the primary seal (10) and auxiliary sealing device (25; 35; 50) and out through the drain (26).

2. A seal according to Claim 1 characterised in that an annular element (30; 42) is mounted on a rotatable component (17) for rotation therewith, the annular element (30; 42) being disposed between the primary seal (10) and auxiliary sealing device (25; 35; 50), means (31; 40) being associated with the annular element (32; 42) for inducing flow of fluid past the auxiliary sealing device (25; 35; 50) and into the space (27) between the primary seal (10) and the auxiliary sealing device (25; 35; 50).

3. A seal according to Claim 2 characterised in that vanes (31) are provided on the annular elements (30) to induce flow of fluid past the auxiliary sealing device (25; 50) and into the space (27) between the auxiliary sealing device (25; 50) and primary seal (11).

4. A seal according to Claim 2 characterised in that spiral grooves (40) are provided on a stationary component (36) in juxtaposed relationship to the annular element (42), so that upon rotation of the annular element (42), drag on the annular element (42) will cause the fluid to circulate and flow down the spiral grooves (40) past the auxiliary sealing device (35) and into the space (27) between the auxiliary sealing device (35) and primary seal (10).

5. A seal according to any one of the preceding Claims characterised in that the auxiliary sealing device (25) is a throttle bush.

6. A seal according to any one of Claims 1 to 4 characterised in that the auxiliary sealing device (35) is a mechanical face seal.

7. A seal according to Claim 6 characterised in that a face seal member (36) is located in juxtaposed relationship to an annular element (42) mounted for rotation with one component (17), the seal face member (36) being mounted in fixed rotational relationship relative to the other component (12), means (40, 41) being provided to maintain a running clearance between the seal face member (36) and annular element (42) under normal operation of the primary seal (10), fluid pressure forcing the seal face member (36) into sealing engagement with the annular element (42) upon failure of the primary seal (10).

8. A seal according to Claim 7 characterised in that the seal face member (36) is resiliently loaded towards the annular element (42), the flow of fluid past the auxiliary sealing device (35) into the space (27) between the auxiliary sealing device (35) and primary seal (10) serving to force the seal face member (36) away from the annular element (42), to maintain a running clearance therebetween under normal operation of the primary seal (10).

9. A seal according to Claim 7 or 8 characterised in that the seal face member (36) has a series of spiral grooves (40) extending from one periphery and a continuous dam formation (41) adjacent the other periphery.

10. A seal according to any one of Claims to 4 characterised in that the auxiliary sealing device (50) is a lip seal (51, 53), the lip seal (51, 53) being arranged such that flow of fluid past the auxiliary sealing device (50) into the space (27) between the primary seal (10) and auxiliary sealing device (50) will urge the lip seal (51, 53) out of sealing engagement.

FIG 1

FIG 2

FIG 3

## European Patent Office

# EUROPEAN SEARCH REPORT

Application Number

## EP 90 30 7996

## DOCUMENTS CONSIDERED TO BE RELEVANT

| Category | Citation of document with indication, where appropriate, of relevant passages | Relevant to claim | CLASSIFICATION OF THE APPLICATION (Int. CI.5) |
|---|---|---|---|
| X | GB-A-2 167 141 (M.A.N.)<br>* page 3, lines 61 - 68; figure 5 *<br>— — — | 1-3,5 | F 16 J 15/00<br>F 16 J 15/16 |
| A | FR-A-2 262 242 (FEODOR BURGMANN DICHTUNG-SWERKE)<br>* page 5, line 24 - page 7, line 4; figure 2 *<br>— — — | 1,6 | |
| A | US-A-2 646 999 (BARSKE)<br>* column 3, line 50 - column 5, line 8; figure 3 *<br>— — — — — | 7-8 | |
| | | | TECHNICAL FIELDS SEARCHED (Int. CI.5)<br><br>F 16 J |

The present search report has been drawn up for all claims

| Place of search | Date of completion of search | Examiner |
|---|---|---|
| The Hague | 26 October 90 | NARMINIO A. |